# EUROPEAN PATENT APPLICATION

(11) **EP 0 669 552 A2**
(43) Date of publication of application: **30.08.1995**
(21) Application number: 95630002.4
(22) Date of filing: 19.01.1995
(51) Int. Cl.: G03B 21/132

(54) **Transparency organizer and storage tray**

(30) Priority: 26.01.1994 CA 2114390; 18.02.1994 CA 2116523
(71) Applicant: Nichod Inc., Ancaster, Ontario L9G 2A9 (CA)
(72) Inventor: Nicholson, Patrick S., Ancaster, Ontario L9G 2A9 (CA); Hodgson, David S., Carlisle, Ontario L0R 1H3 (CA)
(74) Representative: Schmitz, Jean-Marie

(57) **Abstract**

A transparency organizer and storage tray (10) adapted to act as a sheet (T) holding, transferring, and repository means for managing the flow control of a plurality of transparency film sheets (T), each generally impressed with indicia creating a discernible image when viewed, characterized by a transparency film sheet carrying region (13) including, a first transparency film sheet source holding region (14) adapted to house a plurality of sheets (T) which are to be projected, a second sub-adjacent transparency film sheet storage region (15) adapted to house a plurality of said sheets (T) after projection and, means (M, 24, 31, 111) for holding the transparency film sheet carrying region (13), at an elevation so that the bottom (19) of the second transparency film sheet storage region (15) is at an elevation co-incident with a platen element, actual or imaginary, (11,PP) of a transparency projector (P) so that light passes through that transparency sheet (T) for viewing, and means (19, 21, 37, 311, 312) for holding the leading edge brackets (E) of the lowest most transparency in the film sheet carrying region (13) at an elevation above the platen element (11,PP), the second transparency film sheet storage region (15) having a lower forward margin (12) from which extends a translucent sheet (111) adapted to extend over and to adhere to the platen (PP) of the projector and to hold the tray (10) in a plane essentially co-incident with the platen (PP).

## Description

This invention relates to transparency organizer and storage tray, which is particularly suitable; to store transparencies in a convenient and sequential order; and, to be used as a retrofit overlay on an overhead transparency film sheet projector to allow the user to simply slide transparencies from the tray onto the projecting surface or platen of the projector from which the transparency is viewed: and, thereafter, to slide the transparency back into the same storage tray for storage; were they are collated in the same original sequential order.

For overhead transparency film sheet projection, one uses an overhead projector, which generally has an upper flat glass plate, acting as a translucent platen sized a little larger than 8½ by 11 inches, or metric A4, onto which is placed a transparency film sheet which is to be projected by the projector onto a screen overhead. From the underside of a glass or translucent platen, is a source of light which passes through the platen, and the transparency film sheet, to reflect off and inclined mirror projecting the light with its latent transparency image onto the overhead screen for view by an assembly of people in a room such as in a conference room, meeting room, classroom, and the like.

The organization of transparency film sheets for such presentation has been haphazard at best and normally requires a second table adjacent to that of the projector onto which the transparency film sheets are stacked prior to display, requiring individual, sequential transport onto the projector platen, and then removal onto a collection stack, normally also located on the second table. In that respect, the transparency film sheet to be projected is first removed from the source pile and placed on the projector platen, and then after viewing, is removed from the projector platen to be put onto a collection or completion pile adjacent to the source transparency pile.

We have conceived of a simple device which has two juxtaposed internal transparency film sheet holding regions, and a movable translucent sub-platen which may be moved into a closing position, to close and overcover each region and thereby constrain any transparencies that are within either region therein; while adapted to be moved into an open operative position exposing one margin of each holding region adjacent to the sub-platen. When in the open operative position, the translucent sub-platen is adapted to overcover the platen of the overhead projector and to permit the simple movement of a transparency film sheet from the uppermost holding tray of transparency film sheet source region onto the sub-platen so that it may be reviewed. In order to move a given transparency film sheet from its upper source transparency film sheet holding region onto the sub-platen, it may simply be moved by pressing down with the index finger and sliding the transparency film sheet onto the sub-platen.When the transparency film sheet, after review, is to be removed from the sub-platen, it may be, in a similar fashion, moved with the index finger, sliding it backward into the lower transparency film sheet accumulation and storage region. The steps are repeated for sequential view of each transparency film sheet in the programme. If another programme review of the transparency film sheets is required, the transparency film sheets accumulated in the stored lower tray are physically moved "en mass" into the upper source tray and the cycle can be simplistically repeated.

The invention therefore contemplates a transparency organizer and storage tray (10) adapted to act as a sheet (T) holding, transferring, and repository means for managing the flow control of a plurality of transparency film sheets (T), each generally impressed with indicia creating a discernible image when viewed, characterized by a tranparency film sheet carrying region (13) including, a first transparency film sheet source holding region (14) adapted to house a plurality of sheets (T) which are to be projected, a second sub-adjacent transparency film sheet storage region (15) adapted to house a plurality of said sheets (T) after projection, means (M, 24, 31) for holding the transparency film sheet carrying region (13), at an elevation so that the bottom (19) of the second transparency film sheet storage region (15) is at an elevation generally co-incident with a platen element, actual or imaginary, (11,PP) of a transparency projector (P) so that light passes through that transparency film sheet (T) for viewing when light passes through the platen element and that transparency film sheet (T) overlaying the same.

In a preferred embodiment of the invention, the tray (10) additionally includes a cover (C) and an anchoring means (47) carried by the tray (10), one end of the cover (C) being is articulatingly attached through a flexible hinge (12) to the margin of the second transparency film storage region (15), the cover (C) including a plurality of articulating elements and surfaces (12, 30 through 45), at least one of which (30, 39) being adapted to carry means (50, 55) for removable attachment of the tray (10) to a transparency projector (P), one panel (45) of the cover (C) carrying means (46) for removable attachment to the anchoring means (47) whereby the cover (C), in its closed position, overcovers and secures closed, the regions (14, 15); and, in an operative position exposes proximate margins of said regions (14, 15) at an operative elevation intersecting the prolongation of the axial plane of the platen (11,PP) whereby to permit slide transport of the transparency (T) into and out of the tray (10) out from the upper region (14), onto the platen (11,PP), thence, into the lower storage region (15, 15U) in the identical sequential order as when located in the upper region (14).

The invention may also contemplate that the first and second transparency regions (14, 15) are imaginary sub-regions of the sheet carrying region (13); that an elevated ramp anchor bar (312) is mounted preferably across the forward margin of the bottom (20) at a distance which is narrower than the depth or width of the transparencies (T) and the means for holding the transparency film sheet carrying region (13) is a translucent laminate sheet attached to the elevated ramp anchor bar (312), with its upper sheet (111U) being a mylar and the lower sheet (111L), being a cling vinyl which is adapted to fold into and fold out of the tray, for storage or use as the case might be.

The invention will now be described by way of example and reference to the accompanying drawings in which :
Figure 1, is a perspective of an embodiment of the invention opened, and in operative position, one portion transparently overcovering the projection table of the transparency projector;
Figure 2 is a top plan view of the embodiment of figure 1;
FIgure 3 is a section along lines 3-3 of figure 2;
Figure 4 is a closed, non-operative perspective view of the embodiments of figures 1, 2 and 3;
Figure 5 is a perspective view of an alternative embodiment.
Figure 6 is a perspective view, partially in section, of a further alternative embodiment.
Figure 7 is a perspective view, of a further embodiment additionally employing an integral repositionable cover-support structure, shown postured, in the closed tray, transparency securing position.
Figure 8 is a top plan view of the embodiment of figure 7 with a top cover-support structure postured in its transitional fully flat open position.
Figure 9 is an assembled operative perspective view of the embodiments of Figures 7 and 8, the top cover-support structure positioned to support the tray and exposing means for affixing part of the top cover-support structure to a transparency projector.
Figure 10 is a side elevational view of the embodiment of figure 9.
Figure 11 is a side elevational view, similar to that of figure 10, but wherein the adhesion of the tray to the transparency projector by alternative suction cup means.
Figure 12 is a perspective view of a further alternative embodiment;
Figure 13 is a section along lines XIII-XIII of figure 12.
Figure 14 is a section, similar to that of Figure 13, of yet a further embodiment, which eliminates the need for an inter-regional transparency separation plate or wall.

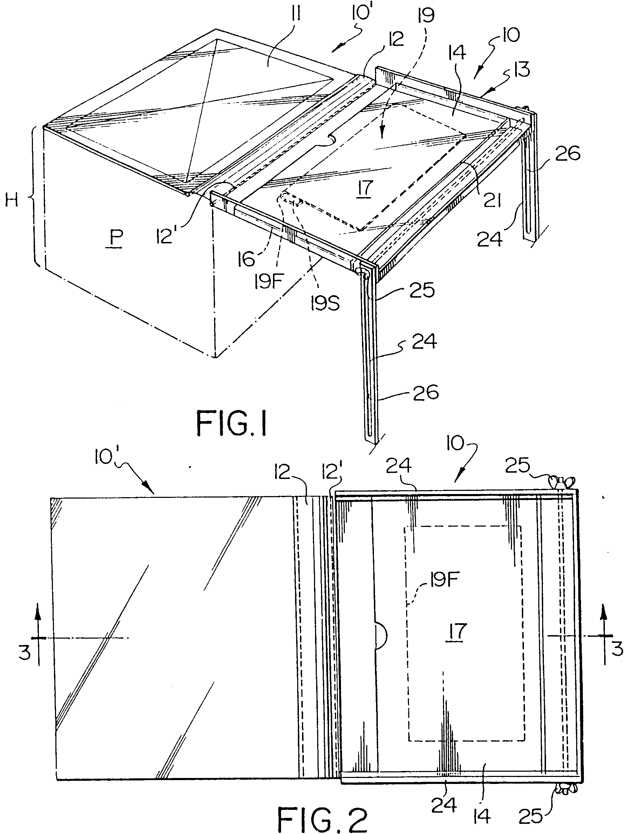

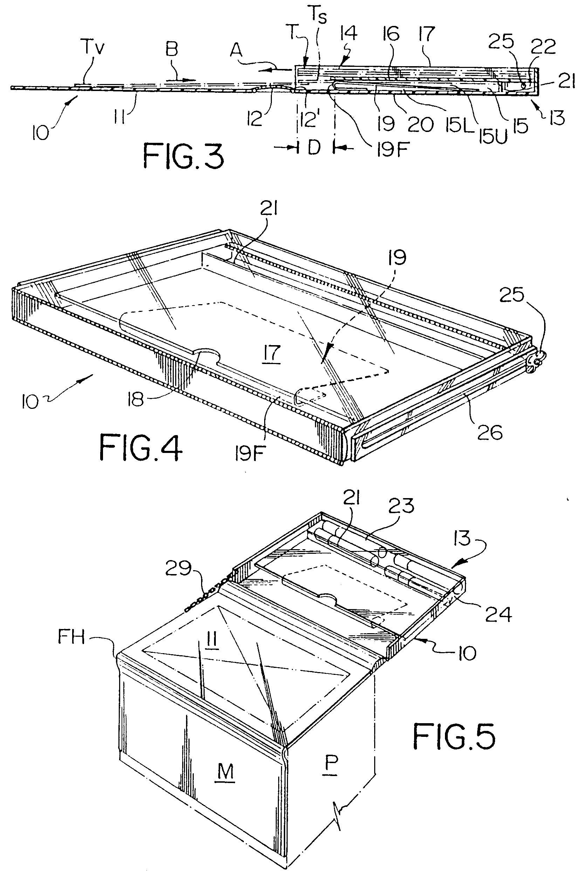

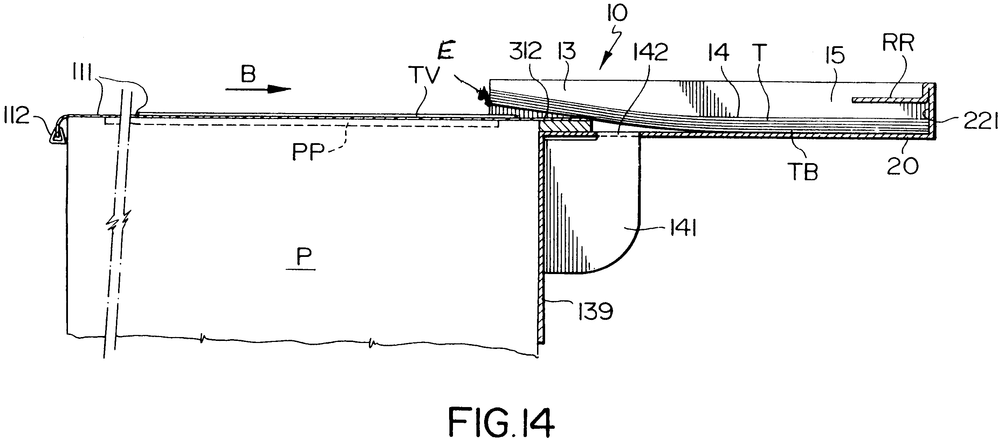

Referring now to Figure 1, and to a preliminary embodiment, a transparency organizer and storage tray (10) is shown in its open operative position as (10') and has a translucent sheet glass plate or sub-platen (11) hingeably attached through a flexible hinge (12) to the lower lateral distal margin (12') of a transparency holding region (13) of the tray (10); including, and most clearly seen in the cross-section Figure 3, an upper tray region (14) and a lower tray region (15) respectively separated by an inter-regional or lateral separation plate, or partition wall (16), but see Figure 14 where the plate (16) can be avoided. The upper tray region (14) acts as a holding source region for a plurality of transparency film sheets (T) and it has an overcovering sheet plate (17), which in Figure 4 is shown as translucent, with a marginal notch (18) adapted to accommodate the index finger of the operator for the purposes, as will be described, more fully hereafter, to move the topmost transparency (T) from region (14) onto the sub-platen (11) simply by "touch and push".

The lower tray region (15) is separated, at its forward end, by a flexible sheet spring (19) as is most clearly seen in figures 1 through 5 and separates the lower tray region (15) into a sub-adjacent lower sub-region (15L) and a super-adjacent lower sub-region (15U). As most clearly seen Figures 1 through 4, the forward margin (19F) of the sheet spring (19) is recessed a small distance from the open proximate margin of the lower tray region (15L), of the dual tray portion (13).

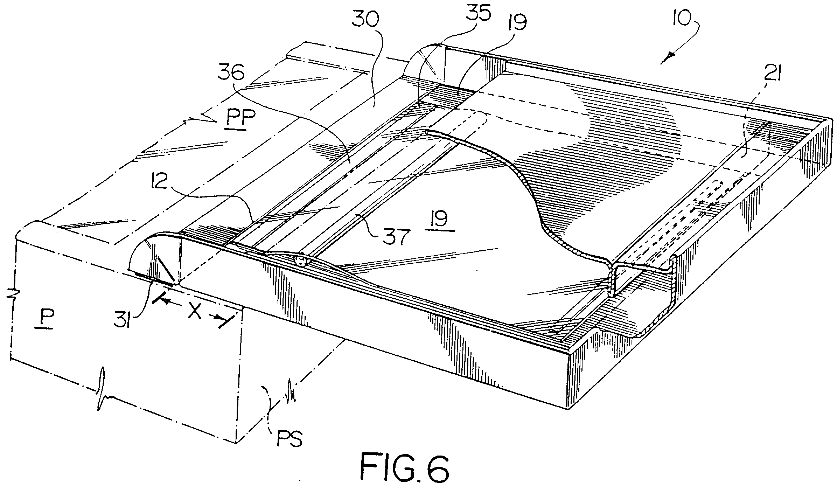

In the embodiment shown in figures 1 through 5, the hinge attachment (12) is flexed convex, when in the open position, and is most clearly seen in that configuration in figure 3. In the embodiments of figures 1 through 5, the hinge attachment (12) can be resilient material or a suitable form so that on its one lateral margin, it can be affixed, at 12', to the lower proximate margin of the bottom panel (20) which forms the bottom of the lower tray region (15). The bottom panel (20), as well, acts as the bottom of the dual tray portion (13). The lateral depth of the lower tray (15) can be such that there can be an internal end wall (21), which thereby defines a rectangular laterally oriented plenum (22) along the back margin of the tray (10) into which, can be placed cylindrical articles, seen in figure 5 and noted as (23), being markers, pointers and the like. They can be removed if a sliding side door or panel (24) is provided, seen, unclearly, in the embodiment of figure 5, prior to placing the tray (10) in the open operative position. In the embodiments of figures 1 through 4, in order to counter-lever the mis-distribution of weight, when in the open operative position of figures 1, 2 and 3, the tray (10) is provided with lateral legs (24) which are pivotly hinged by a wing nut means (25) to the distal end of the dual tray portion (13) so as to allow the movement of the legs into depending position in the open operative position of figure 1; and alternatively, or as seen in the top plan view and perspective views, figures 2 and 4 respectively into the closed collapsed position so as to be juxtaposed to the ends of the dual tray portion (13). It is preferred, in the embodiment of figures 1 through 4, that these legs (24) have an obround race or aperture (26), which is shown in figures 1 and 4 but not in the other figures. This allows for the tray (10) to be positioned at an elevational suitable to that of the projector (P), depending upon the projector height (H). Some projectors (P) have a deep height (H), for instance, those in which the illuminating source is within the projector (P), while others have a thin height (H) as where the illuminating source is adjacent the reflective mirror (R) and shines down onto the platen (PP) of the projector (P) through the transparency (T) and then back up onto the mirror for reflection forward onto a screen. In the latter case, the projector platen (PP), is a reflective Frenel lense.

In the embodiments of figures 1 through 4, therefore, the obround aperture (26) is preferred to be defined in the legs (24) for the accommodation of different projector heights (H).

Such legs (24) can be avoided by the embodiment shown in figure 5. In this embodiment, the legs (24) are non-existent. A sheet of flexible sheet of magnetic material (M) has its marginal edge affixed through a second flexible hinge (FH) attached to the distal edge of the sub-platen (11). Generally, the projector body (P) is made of metal and the magnetic sheet (M), when placed near the projector body (P) fixedly attaches itself, in a removable manner of course, to secure the holder (10) to the projector (P). In this embodiment, it is necessary to fix the relationship, when in the open position, of the sub-platen (11) with the dual tray portion (13) and this is accommodated by using link chain or other flexible means (29), of a pre-determined fixed length, interconnecting the sub-platen (11) and the dual tray region (13). Thus, when in the fully extended and in the open position, as shown in figure 5, the dual tray portion (13) is fully horizontal, co-planar with, but juxtaposed to, the sub-platen (11).

Referring to figure 6 and yet a third embodiment of the invention, the sub-platen (11) is imaginary and is defacto substituted, to be the existing projector platen (PP), or reflective Frenel lense, of the projector (P). The flexible hinge (12) has, on its distal margin, a lateral strip (30), the lower surface (31) of which is either an adhesive or a strip of Velcro®. The strip (30) is press fitted onto the lateral edge of platen (PP), actually to the marginal top of the projector (P), see Figure 6 by appropriate means to hold the lower sub-region (15) in a plane that intersects the plane of a platen (PP). The rigidity of the tray (10), and the overlapped region "X", between the hinge (12) and the projector side (PS), holds the tray (10) in the full horizontal position, as shown in this figure. If the tray (10) is composed of paper, then the weight of the tray (10) even with as many as 25 transparencies, is light and the cardboard is sufficiently strong in order to sustain it in the open operative position, shown. In this particular embodiment, the sheet spring (19) is in fact a cut sheet of transparency sheet material whose forward margin (19F, 35) has its underside covered with an adhesive (36) which sticks to the upper surface of a bottom cardboard panel (20). An underlying strip (37) of open-cell foam which acts as a biasing means on the flexible sheet spring (19) is located away from the margin (19F,35) yet under the sheet spring (19)and is adhesively secured, preferably to the upper surface of the bottom panel (20) rather than to the under surface of the sheet spring (19).

In each of the aforesaid three embodiments disclosed, it will noted that the forward margin (19F) of the flexible hinge (19) is at an elevation at, or preferably marginally below the sub-platen (PP) or imaginary sub-platen (PP'), see the cross-section Figure 3. Thus, and now referring to the flow of transparencies (T), and the cross-section Figure 3, when the uppermost transparency (T) in the upper region (14), is touched with the human index finger extending into the slot (18) and moved laterally in the direction of the arrow (A) in Figure 3, the uppermost transparency (T) is slipped onto the platen (P), shown in phantom in that figure as (T_{V}) and referred to as transparency being viewed. After viewing, that transparency (T_{V}) is moved with the index finger, in the direction of arrow (B) and on movement, it rises over the convex hinge (12) to index itself onto the upper surface of the flexible hinge (19) and to seat itself, as the first transparency, in the super-adjacent lower sub-region (15U). The forward face (19F) of the hinge being recessed away, distance (D) in Figure 3, from the proximate open faces of regions (14) and (15) allow that transparency (T_{S}), when seated in the super-adjacent lower sub-region (15U), to "overhang" the forward face (19F) of the hinge (19) so that when the next transparency on the platens (11,PP) is moved in the direction (B) from the platens (11,PP), that transparency (T _{S} 2), indexes underneath the first transparency (T_{S} ) yet enters the super-adjacent lower sub-region (15U). In this way, after complete viewing of all those transparencies (T) that were in the upper region (14), the transparencies are organized and stacked in the super-adjacent lower sub-region (15U) in the identical viewing sequence, as they had existed in the upper tray region (14). For a second viewing of the sequence of transparencies (T), the group of the transparencies located in the super-adjacent lower sub-region (15U), maybe collectively pulled out of that sub-region (15U) and placed into the upper region (14). Sequential viewing can then simplistically take place repeating the above steps. The sub-adjacent lower subregion (15L) acts as a plenum reservoir to the super-adjacent lower sub-region (15U).

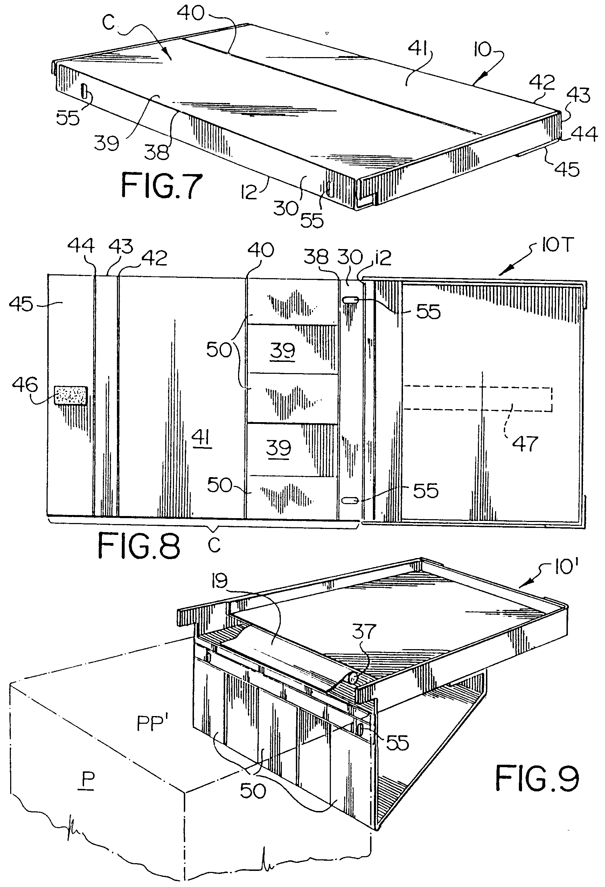

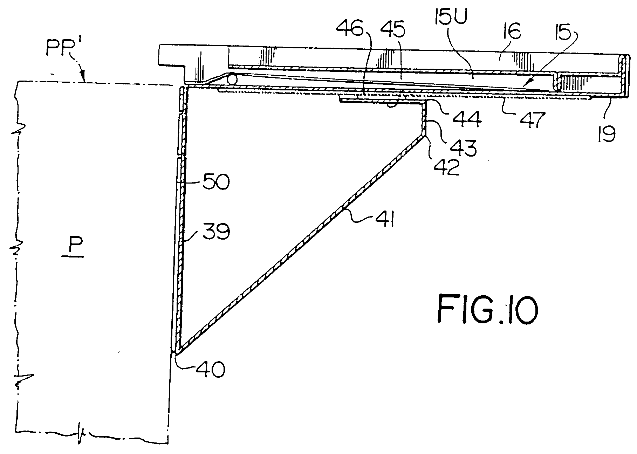

Referring yet to a further embodiment, which is depicted in Figures 7 through 11, the transparency organizer and storage tray (10) is shown in its closed position in Figure 7; in its transitional fully flat open position, as (10T) in Figure 8, and in the assembled operative position, adhering to a transparency projector (P), as (10') in Figure 9. This tray (10, 10T, 10') is preferably made of cardboard and the flexible hinge (12) of Figure 6 is now referenced the same as in Figure 6, but in Figures 7 and 8 now also acts as the lowest most hinge interconnecting through to the front lateral strip (30) both being integral elements of an integral cover-tray support structure (C), comprising integral articulating elements, (12, 30) through 45). In the closed position of Figure 7, the cover sheet (C) closes the tray (10) to contain any transparencies (T) located in either of the upper tray region (14) or in the lower tray region (15), yet each of the regions (14, 15) is still respectively separated by the partition wall (16), the lower tray region (15) also having the sheet spring (19) sub-partitioning the lower tray region (15) into its sub-adjacent lower sub-region (15L) and the super adjacent lower sub-region (15U). The cover (C) is thus a plurality of sheet elements (12, 30 through 45), and includes the hinge (12) as the lower margin of the front lateral strip (30) which, as its upper margin, is a fold mark (38), and margin to a flat upper forward sheet (39), the opposite side of which is a top lateral fold mark (40) integral to an upper rear flat sheet (41); an upper rear corner fold mark (42) that in fact is the upper rear corner of the tray (10) when in the closed storage position of Figure 7. From this fold mark (42), there is a lateral rear sheet panel (43), then a rear bottom fold mark (44); and finally, a distal panel (45) which, on its inside surface, has a rectangular Velcro® strip (46) which co-acts with a Velcro® strip (47), seen in phantom in Figure 8 that is affixed to the bottom surface of the bottom panel (20) of the tray (10). This Velcro® strip (47) is rectangular and long; centered with its longitudinal axis oriented in the lateral direction, as shown in phantom in Figure 8, so that the other rectangular Velcro® strip (46) can, when in the closed position, as in the Figure 7, mate with a portion of the Velcro® strip (47) and, when to be in one of the open assembled positions of Figure 9 and subsequent, can be released, located and re-attached to the same Veclro® strip (47) thus, respectively holding the tray, either in the closed storage position of Figure 7 or in one of the open operative positions of Figures 7 through 11.

Referring to Figure 8, on the inner surface of the upper panel (39) are affixed three rectangularly shaped flexible composite magnetic flat strips (50) that extend between fold marks (38 and 40). They are depicted again in Figure 9 and provide means for magnetic adhesion of the tray (10) to a magnetizable metallic side of the projector body (P), holding the tray (10), generally parallel to and at an elevation, relative the platen (PP), so that the plane of the platen (PP) intersects the lower tray region (15), particularly sub-adjacent lower sub-region (15L).

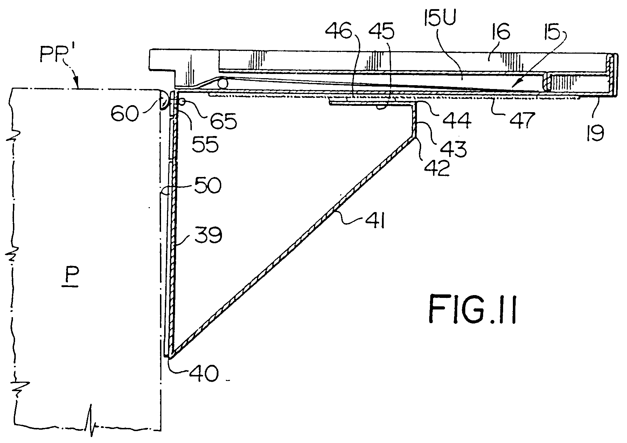

The panel (30) is also provided with at least two obround apertures (55), more clearly seen in Figures 7, 8, 9 and elevtional cross-sectional Figure 11. Through each aperture (55), a suction cup (60) can be pressed fit since the cup (60) normally has an integral stem with bulbous distal end (65). By inserting such suction cup (60) in each of the obround apertures (55), the tray (10'), when in its open operative position, as shown in Figure 11 can be suitably secured to the side of a projector (P) whose body is not composed of a magnetized material such as steel or the like, but of a non-metallic material, aluminum, plastic or other composite.

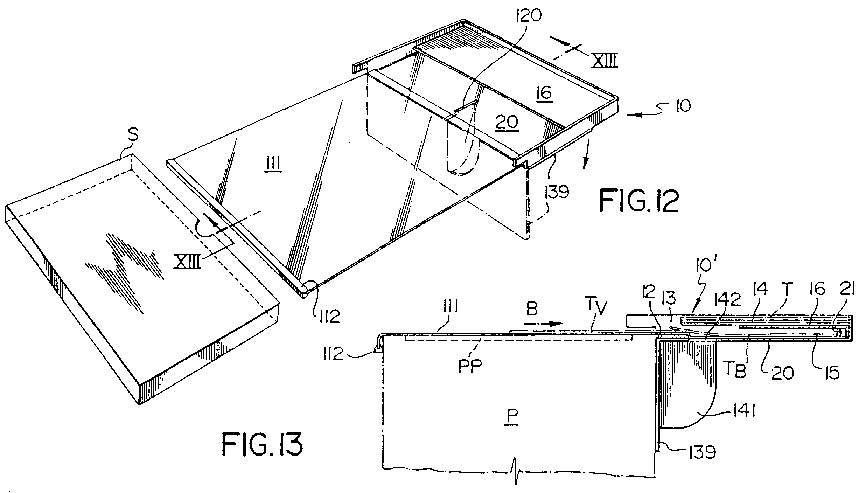

Referring to two further embodiments, one shown in Figures 12 and 13, and the other in Figure 14, the tray (10) is shown in solid form of Figure 12 in its attitude after an overcovering sleeve (S), common to both of these two embodiments is slid off the operative elements of the tray (10). The operative elements consist of transparency holding region (13) that in Figures 12 and 13 includes the upper transparency holding region (14) upon which transparencies to be projected are placed, which overlays the lower transparency holding tray region (15), adapted to hold transparencies after viewing; the two regions (14) and (15) separated by inter-regional separation plate or partition wall (16); in Figure 14 the inter-regional plate (16) is not required, for reasons to be explained. The hinge (12) acts as the hinge point for a support flap (139) which, in Figure 12, is shown folded and underlaying bottom sheet panel (20) of the tray (10) which is its storage position. Surmounting the hinge (12) and to the rear thereof is an elevated ramp anchor bar (312), which also acts as anchor means for a flexible clear plastic laminate film sheet (111) laminated from two sheets (111U, 111L). The upper sheet (111U) is preferably a clear Mylar® film, while the bottom sheet (111L) is a static cling vinyl film: thus, the upper surface (111U) provides a smooth sliding surface over which transparencies can slide to and from while the lower surface (111L) is tactile and is adapted to overlay the platen (PP) of the projector (P) and adhere to it as by pressing it onto the platen (P) by running one's hand over the upper surface (111U) so that the under tactile surface (111L) of the sheet (111) adheres to the platen (PP). Preferably, the clear plastic film laminate sheet (111) is sized so that its distal margin extends into a document cover slide clamp (112), which acts as a rigid frame for the distal end and also partially as a weight, in the operative and use position, as in Figure 13, to additionally support the tray (10) on the platen.

The support flap (139) has a push-out support tab (141), which is pushed out from the body of the flap (139). The tab (141) has an upper finger (142) integral therewith that nests into a longitudinal notch (120) in the bottom (20). When the tab (141) is in the operative position of Figure 13, the finger (142) indexes into the notch (120) and stabilizes the flap (139) in the vertical position so that it can be placed in juxtaposition with the side of the projector (P). The clear plastic film sheet (111) can then be press fit over the platen, as earlier described, and the tray (10') is now in its operative positions of Figures 13 or 14. We prefer that the laminate sheet (111) extends over the top of the elevated ramp anchor bar down the backside thereof and along the upper surface of the bottom (20) as shown in figures 13 and 14. Careful review of the cross-sectional figure 13 shows that the lower region (15) is "shorter" in length than the upper region (14) because the lower region (15) has the inner rear wall (21) which keeps the leading edges of the "viewed" transparencies overhanging the elevated ramp anchor bar (312). Thus, when the first transparency referenced (T_{B}) in fiugre 3 is located in the lower region (15), it lays on the bottom (20) and urges against the back wall (21) while the forward lip (E) of transparency (T_{B}) rests on the elevated ramp anchor bar (312) in the fashion shown in Figure 13 leaving its most forward edge (E) up. When the viewed transparency (T_{V}) is moved in the direction of the arrow (B), it glides underneath the forward edge (E) of the lowest transparency (T_{B}) and hence, the same thing happens repeatedly so that there is a collation of the transparencies in the lower tray region (15) in the identical sequence as the tranparencies (T) had been in the upper tray region (14). After viewing, when all the transparencies (T) in the upper tray region (14) have been exhausted, they are now in the same original sequence in the lower tray region (15). They can simply then be removed from the bottom region (15) and placed into the top region (14) for the next viewing cycle.

Now the only two apparent differences in the embodiments of Fiugres 12 and 13, on the one hand, and that of figure 14, on the other hand, is the elimination of the inter-regional partition (16) and the reduction of the total depth of the tray (10) by making the inner wall (21), shown in Figures 1 through 13, the tray end (221), shown as such in Figure 14. Thus in Figure 14 the upper and lower tray regions (14, 15) become "imaginary" and are encompassed within the single region (13). The "imaginary upper region (14)" is the same depth as the "imaginary lower region (15)"; the transparency film sheet carrying region (13) is but of single depth; not stepped nor partitioned as in the embodiments of Figures 1 through 13. Not apparent, but preferred, in the embodiment of figure 14 is that the height of the elevated ramp anchor bar (312) be exaggerated by multiplying several layers of light cardboard stock as a spacer so that the anchor bar (312) is now thick, say having a height of 1/4'' (.6cm), above the upper surface of the bottom (20). The laminate sheet (111) overcovers the top of the anchor bar (312) to provide a glide path or ramp over which viewed transparencies (T_{V}) can be slid so as to successively index under the leading edge (E) of the lowest of the bottom viewed slide group (t_{B}) and to be stored there. Note that the depth of the tray (10) (distance from hinge (12) to the back wall (ooo) of the tray is less the width of a transparency (T) and all transparencies are flush with the forward margin of the ramp anchor bar (312) or putting it another way essentially flush with the hinge (12). Thus a tray (10) for use with transparencies sized to U.S.A. letter standard, also known as imperial (8 1/2'' x 11'') will be slightly wider than those sized A4 metric. A further review of Figure 4 shows a rear rail (RR). The transparencies (T) are stored under this tray but when the tray is to be stored and put into its sleeve (F), the laminate sheet (111) can be folded and placed on top of this rear rail (RR) so that it does not crease since the cling vinyl surface has a tendency to crease, if under pressure. If this happens when the transparencies are viewed, there is a black line through the transparency because of the crease in the laminate sheet (111).

It will be apparent from the foregoing, that variations to the invention may be made without deviating from the embodiments disclosed or claimed herein. In the embodiments of Figures 12, 13 and 14, other than the laminate sheet (111), the balance of the tray (10) is of thin wall corrugated cardboard, approximately 1.5mm thick (1/16th of an inch).

## Claims

1. A transparency organizer and storage tray (10) adapted to act as a transparency film sheet (T) holding, transferring, and repository means, for managing the flow control of a plurality of transparency film sheets (T), each generally impressed with indicia creating a discernible image when viewed, comprising:
(a) a transparency film sheet carrying region (13) including,
(i) a first transparency film sheet source holding region (14) adapted to house a plurality of sheets (T) which are to be projected,
(ii) a second transparency film sheet storage region (15) adapted to house a plurality of said sheets (T) after projection;
(b) means (M, 24, 31, 111) for holding the transparency film sheet carrying region (13), at an elevation so that the bottom (19) of the second transparency film sheet storage region (15) is at an elevation generally co-incident with a platen element, actual or imaginary, (11,PP) of a transparency projector (P) so that light passes through that transparency film sheet (T) for viewing when light passes through the platen element and that transparency film sheet (T) overlaying the same; and,
(c) means (19, 21, 37, 311, 312) for holding the leading edge brackets (E) of the lowest most transparency in the film sheet carrying region (13) at an elevation above the platen element (11,PP),
the second transparency film sheet storage region (15) having a lower forward margin (12) from which extends a translucent sheet (111) adapted to extend over and to adhere to the platen (PP) of the projector and to hold the tray (10) in a plane essentially co-incident with the platen (PP).

2. The tray (10) as claimed in claim 1, characterized by the first transparency film sheet holding region (14) being super-adjacent to that of the second transparency film sheet storage region (15).

3. The tray (10) as claimed in claim 2, characterized in that the second transparency film sheet storage region (15) has a biasing means (19S, 19F, 37) subdividing said region (15) into a super-adjacent second region (15U) and a sub-adjacent second region (15L).

4. The tray (10) as claimed in claim 3, characterized in that the biasing means (19S), (19F) and (37), includes a flexible sheet (19).

5. The tray (10) as claimed in claim 3, characterized in that said flexible sheet is a single cardboard sheet (19), with a forward bend (19F), and a forward seam (19S).

6. The tray (10) as claimed in any of claims 1 to 5, characterized in including a cover (C), and an anchoring means (47) carried by the tray (10) one end of the cover (C) being articulatingly attached through a flexible hinge (12) to the margin of the second transparency film storage region (15L), the cover (C) including a plurality of articulating elements and surfaces (12, 30 through 45), at least one of which (30, 39) being adapted to carry means (50, 55) for removable attachment of the tray (10) to a transparency projector (P), one panel (45) of the cover (C) carrying means (46) for removable attachment to the anchoring means (47) whereby the cover (C), in its closed position, overcovers and secures closed, the regions (14, 15); and, in an operative position exposes proximate margins of said regions (14, 15) at an operative elevation intersecting the prolongation of the axial plane of the platen (11,PP) whereby to permit slide transport of the transparency (T) into and out of the tray (10) out from the upper region (14), onto the platen (11, PP), thence, into the lower storage region (15, 15U) in the identical sequential order as when located in the upper region (14).

7. The tray (10) as claimed in claim 1 or 2 characterized in that the lower surface of the translucent sheet (111) is tactile relative to a glass platen (PP) of the transparency projector (P) and is thereby adapted to adhere to the platen (PP) of the projector (P).

8. The tray (10) as claimed in claim 1 or 2, characterized in further comprising a foldable flap means (139) attached to the underside of the margin (12) of the second transparency film sheet storage region (15) adapted to collapse and to fold against the bottom (20) said region (15), when in a non-operative storage mode, and to be positioned essentially orthogonal thereto in the operative mode.

9. The tray (10) as claimed in claim 1 or 2, characterized in that lower surface of the translucent sheet (111) is tactile relative to a glass platen (PP) of the transparency projector (P) and is thereby adapted to adhere to the platen (P), and in further comprising a foldable flap means (141) attached to the underside of the margin (12) of the second transparency film sheet storage region (15) adapted to collapse and to fold against the bottom (20) said region (15), when in a non-operative storage mode, and to be positioned essentially orthogonal thereto in the operative mode.

10. The tray (10) as claimed in claim 1 or 2, characterized in that the second transparency film sheet storage region (15) has a lower forward margin (12) from which extends a clear sheet (111), the lower surface of which is tactile relative to a glass platen (PP) of a transparency projector (P) and is thereby adapted to adhere to the platen (PP) of the projector, and in further comprising a foldable flap means (141) attached to the underside of the margin (12) of the second transparency film sheet storage region (15) adapted to collapse and to fold against the bottom (20) said region (15), in a non-operative storage mode, and to be positioned essentially orthogonal thereto, including means for interconnecting the flap (141) and the bottom (20) by means of a tag (141) which stabilizes it in the orthogonal operative position.

11. The tray (10) as claimed in claim 1 or 2, characterized in that the first and second transparency regions (14, 15) are imaginary sub-regions of the sheet carrying region (13).

12. The tray (10) as claimed in claim 1 or 2, characterized in that the first and second transparency regions (14, 15) are imaginary and subregions of the sheet carrying region (13), which has as its lower surface a bottom (20) with a forward margin; including,
(c) an elevated ramp anchor bar (312) mounted across the lower surface (20) near the forward margin thereof.

13. The tray (10) as claimed in claim 12, characterized in that the elevated ramp anchor bar (312) has its upper surface at a predetermined distance above the bottom (20).

14. The tray (10) as claimed in claim 12, characterized in that the distance between the elevated ramp anchor bar (312) and the rear margin (221) of the sheet carrying region (13) is less than the width of transparencies (T).

15. The tray (10) as claimed in claim 12, characterized in that the elevated ramp anchor bar (312) has its upper surface at a pre-determined distance above the bottom (20), and in that the distance between the elevated ramp anchor bar (312) and the rear margin (212) of the sheet carrying region (13) is less than the width of transparencies (T).

16. The tray (10) as claimed in claim 1 or 2, characterized in that the first and second transparency regions (14, 15) ar imaginary and subregions of the sheet carrying region (13); which has as its lower surface a bottom (20) with a forward margin; including
(c) an elevated ramp anchor bar mounted across the bottom (20) near the forward margin thereof, wherein the distance between the elevated ramp anchor bar (312) and the rear margin (212) of the sheet carrying region (13) is less than the width of transparencies (T) and, wherein the holding means (M, 24, 31, 111) has an upper smooth surface and a lower tactile surface and is translucent.

17. The tray (10) as claimed in claim 16, characterized in that the elevated ramp anchor bar (312) has its upper surface at a pre-determined distance above the bottom (20).

18. The tray (10) as claimed in claim 1 or 2, characterized in that the first and second transparency regions (14, 15) are imaginary and subregions of the sheet carrying region (13); which has as its lower surface a bottom with a forward margin; including,
(c) an elevated ramp anchor bar mounted across the lower surface (20) near the forward margin thereof, wherein the distance between the elevated ramp anchor bar (312) and the rear margin of the sheet carrying region (13) is less than the width of transparencies (T) and, wherein the holding means (M, 24, 31, 111) is a translucent laminate sheet (111), the upper sheet (111U) being a mylar® and the lower sheet (111L) being a cling vinyl.

19. The tray (10) as claimed in claim 18, characterized in that the elevated ramp anchor bar (312) has its upper surface at a predetermined distance above the bottom (20).
